Europäisches Patentamt

European Patent Office

Office européen des brevets

(19)

(11) **EP 1 052 791 A1**

(12) **EUROPEAN PATENT APPLICATION**
published in accordance with Art. 158(3) EPC

(43) Date of publication:
15.11.2000 Bulletin 2000/46

(51) Int. Cl.⁷: **H04B 7/26**, **H04J 13/00**

(21) Application number: 99972808.2

(86) International application number:
**PCT/JP99/06501**

(22) Date of filing: 22.11.1999

(87) International publication number:
**WO 00/31900 (02.06.2000 Gazette 2000/22)**

(84) Designated Contracting States:
**AT BE CH CY DE DK ES FI FR GB GR IE IT LI LU MC NL PT SE**
Designated Extension States:
**AL LT LV MK RO SI**

(30) Priority: 26.11.1998 JP 33611298

(71) Applicant:
**MATSUSHITA ELECTRIC INDUSTRIAL CO., LTD.**
**Kadoma-shi, Osaka 571-8501 (JP)**

(72) Inventors:
• HIRAMATSU, Katsuhiko
  **Yokosuka-shi, Kanagawa 239-0831 (JP)**
• MIYA, Kazuyuki
  **Asao-ku, Kawasaki-shi, Kanagawa 215-0021 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **BASE STATION AND METHOD OF TRANSMISSION POWER CONTROL**

(57)    The radio network controller sends a same value of target quality for transmit power control to base stations involved in diversity handover simultaneously. This makes it possible to correctly detect the position even during diversity handover and reduce interference with other base stations. Furthermore, performing such control that raises the target quality of transmit power control for a service requiring immediate attention and does not raise so much the target quality for a service with low accuracy and without requiring immediate attention can make position detection according to required accuracy compatible with reduction of interference with other base stations.

FIG.4

**Description**

Technical Field

The present invention relates to a base station apparatus having a function of detecting the position of a terminal apparatus in communication and its transmit power control method.

Background Art

A method of detecting the position of a terminal apparatus in communication by a base station apparatus in a CDMA-based radio communication system is disclosed in "Requirements and Objectives for 3G Mobile Services and System (ARIB) 1998.7.21", etc.

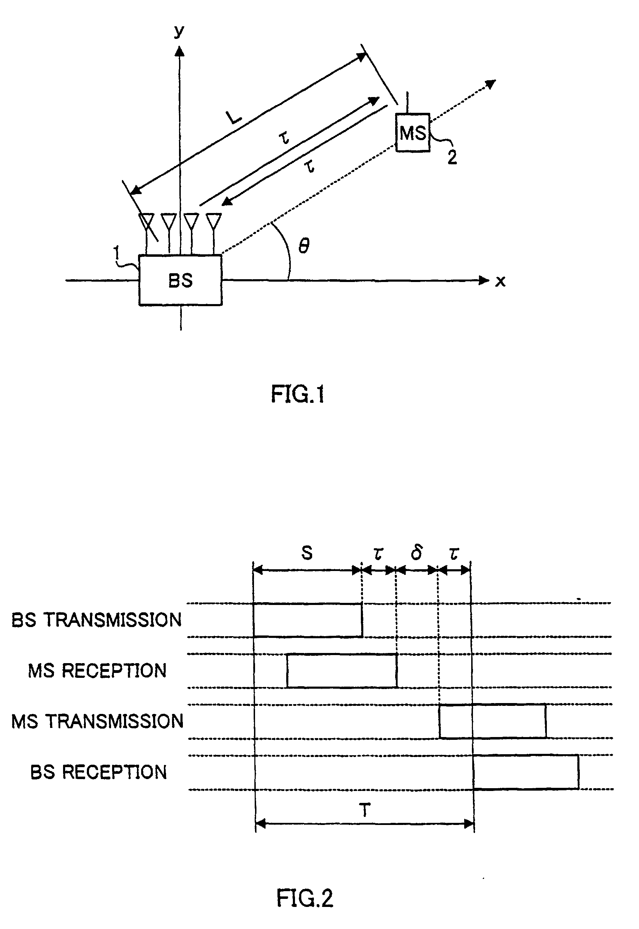

FIG.1 is a diagram showing a radio communication system including a base station apparatus having a position detection function. When base station apparatus 1 detects the position of terminal apparatus 2 with which it is carrying out a radio communication, base station apparatus 1 detects direction angle θ of terminal apparatus 2, angle between the direction of arrival of a reception signal and the base station taking advantage of array antenna characteristics. This method of detecting the direction of the terminal apparatus is disclosed in the "Introductory Course for Adaptive Signal Processing Technology Using Array Antenna and High Resolution Arriving Wave Estimation", etc.

After detecting direction angle θ of terminal apparatus 2 formed with the own station, base station apparatus 1 measures the distance between the own station and terminal apparatus 2. The method of measuring distance L between base station apparatus 1 and terminal apparatus 2 will be explained below using a slot timing chart in FIG.2.

It takes propagation delay τ for a downlink signal sent from base station apparatus 1 to arrive at terminal apparatus 2. Likewise, it takes propagation delay τ for an uplink signal sent from terminal apparatus 2 to arrive at base station apparatus 1. Furthermore, it takes apparatus delay δ after terminal apparatus 2 completes reception of the downlink signal until it starts to send the uplink signal. This apparatus delay δ is generated due to delays in processing of the components of the apparatus and timing jitter, etc.

As shown in FIG.2, slot length S and apparatus delay δ are known to base station apparatus 1, and therefore by measuring time T after base station apparatus 1 starts to transmit the downlink signal to terminal apparatus 2 until base station apparatus 1 starts to receive the uplink signal sent from terminal apparatus 2, it is possible to calculate propagation delay τ from expression (1) below:

$$\tau = (T - S - \delta)/2 \qquad (1)$$

Then, base station apparatus 1 can calculate distance L between the own station and terminal apparatus 2 from expression (2) below, where C is the velocity of light:

$$L = \tau \times C \qquad (2)$$

Here, in a multi-path environment, there is not only a direct wave, which arrives directly from the transmitting side at the receiving side but also a delay wave, which arrives after being reflected by mountains and buildings, etc. Generally, a communication system with high resolution with respect to a delay wave such as a CDMA system carries out RAKE combination that combines reception signals of direct and delay waves arriving at different times to improve its reception quality. Moreover, the CDMA system performs transmit power control based on the power level of the reception signal to reduce interference with other stations while maintaining its desired reception quality.

In a radio communication system, when a terminal apparatus moves away from a base station apparatus with which it is communicating, the terminal apparatus performs handover processing to enter into a communication with another adjacent base station apparatus. This handover processing includes diversity handover processing by which a terminal apparatus communicates with a plurality of base station apparatuses (base station apparatus A and base station apparatus B) simultaneously. During this diversity handover, a radio network control apparatus combines reception signals from a plurality of base station apparatuses and sends the combined signal to a switchboard.

During diversity handover, any one of base station apparatuses performs transmit power control to satisfy the reception quality. Therefore, if any one of these base station apparatuses has good reception quality, this base station apparatus sends a terminal apparatus a command for lowering its transmit power in order to reduce interference in the system and the terminal apparatus follows the instruction of the command. For example, even if base station apparatus A sends the terminal apparatus a command for increasing transmit power, if base station apparatus B sends the terminal apparatus a command for decreasing transmit power, the terminal apparatus decreases transmit power.

Here, while base station apparatus A is carrying out the above position detection, if the terminal apparatus decreases transmit power according to the instruction of base station apparatus B, reception power at base station apparatus A decreases and the position detection performance deteriorates.

Moreover, even if both base station apparatuses perform position detection during diversity handover, the reception quality becomes unstable and the accuracy of position detection deteriorates. Disclosure of Invention

It is an object of the present invention to provide a base station apparatus and transmit power control method capable of accurately detecting the position of a terminal apparatus even during diversity handover.

This object can be attained when performing transmit power control for position detection during diversity handover by setting same target quality for all base station apparatuses involved in diversity handover and by decreasing quality deterioration and fluctuations of a reception signal through transmit power control from a base station apparatus carrying out position detection involved in diversity handover.

Brief Description of Drawings

FIG. 1 is an explanatory drawing to explain position detection of a terminal apparatus;

FIG.2 is a slot diagram to explain position detection of a terminal apparatus;

FIG.3 is a drawing showing a system configuration of a base station apparatus, mobile station apparatus and radio network controller according to an embodiment of the present invention;

FIG.4 is a block diagram showing a configuration of the base station apparatus according to the embodiment of the present invention;

FIG.5 is a block diagram showing a configuration of the mobile station apparatus communicating with the base station apparatus shown in FIG.4; and

FIG.6 is a drawing showing a relationship between power of an advance wave and delay wave and time.

Best Mode for Carrying out the Invention

With reference now to the attached drawings, an embodiment of the present invention will be explained in detail below.

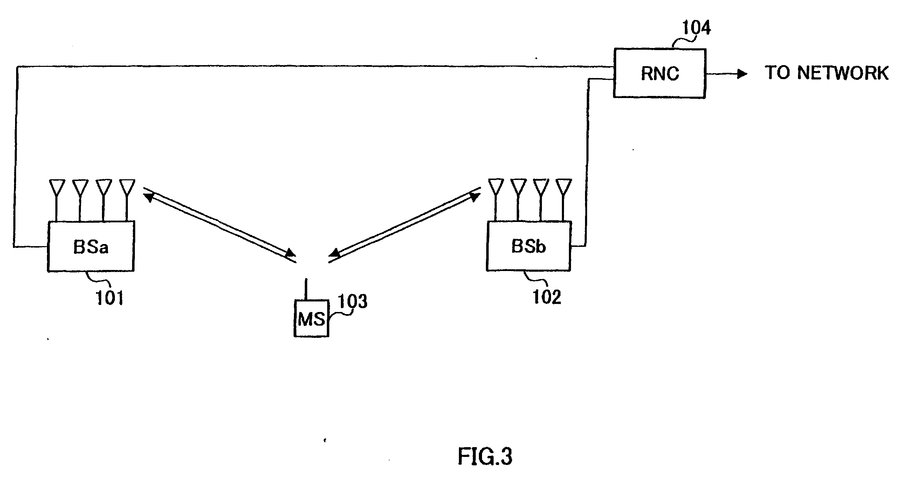

FIG.3 is a block diagram showing a configuration of base station apparatuses, mobile station apparatus. which is a communication terminal, and radio network controller, which controls the base station apparatuses according to an embodiment of the present invention.

First, diversity handover will be explained using FIG.3. Mobile station apparatus 103 is in a diversity handover state in which it is communicating with base station apparatus a101 and base station apparatus b102 simultaneously. Here, suppose a case where base station apparatus a101 is detecting the position of mobile station apparatus 103.

Base station apparatus a101 and base station apparatus b102 notify radio network controller 104 that mobile station apparatus 103 is in a diversity handover state. Radio network controller 104 sends base station apparatus a101 and base station apparatus b102 data to be sent to mobile station apparatus 103.

Base station apparatus a101 spreads data using spreading code A and sends it to mobile station apparatus 103, and base station apparatus b102 spreads data using spreading code B and sends it to mobile station apparatus 103. Mobile station apparatus 103 despreads the signal from base station apparatus a101 using spreading code A and despreads the signal from base station apparatus b102 using spreading code B and combines these signals.

Mobile station apparatus 103 spreads data using spreading code C and sends it. Base station apparatus a101 despreads the reception signal using spreading code C and sends it to radio network controller 104. Likewise, base station apparatus b102 also despreads the reception signal using spreading code C and sends it to radio network controller 104. Radio network controller 104 combines or selects from the signals from both base station apparatuses and sends it to the network.

Then, transmit power control during diversity handover will be explained. During diversity handover, as described above, it is only required that any one of base station apparatuses have good reception quality. Therefore, it is desirable to perform common transmit power control over base station apparatus a101 and base station apparatus b102 based on signals collected in the radio network controller.

However, collecting signals in the radio network controller and then returning transmit power control information to the base station apparatuses will increase control delays, making it impossible to perform correct transmit power control. Therefore, control is performed over base station apparatus a101 and base station apparatus b102 independently so that the reception quality will become excessively high at neither of the two apparatuses. That is, mobile station apparatus 103 controls so that transmit power is increased only when the transmit power control commands from both base station apparatus a101 and base station apparatus b102 instruct transmit power to be "increased". In this case, if either base station apparatus instructs transmit power to be decreased, mobile station apparatus 103 decreases transmit power. Therefore, if base station apparatus a101 is carrying out position detection of mobile station apparatus 103, the position detection performance becomes unstable.

In this case, the following processing is performed. Base station apparatus a101 and base station apparatus b102 notify radio network controller 104 that mobile station apparatus 103 is in a diversity handover state. In response to this information, the radio network controller changes the target quality (for example, level) of transmit power control to a level enough for position detection and notifies it to base station apparatus a101 and base station apparatus b102.

Each base station apparatus is independently carrying out transmit power control and increasing the target quality of transmit power control will improve the quality of reception power arriving at each base station, which will also improve the position detection performance. This is such simple processing that the radio network controller changes the target quality of transmit power control for a plurality of base station apparatuses simultaneously, making it possible to obtain extremely effective results.

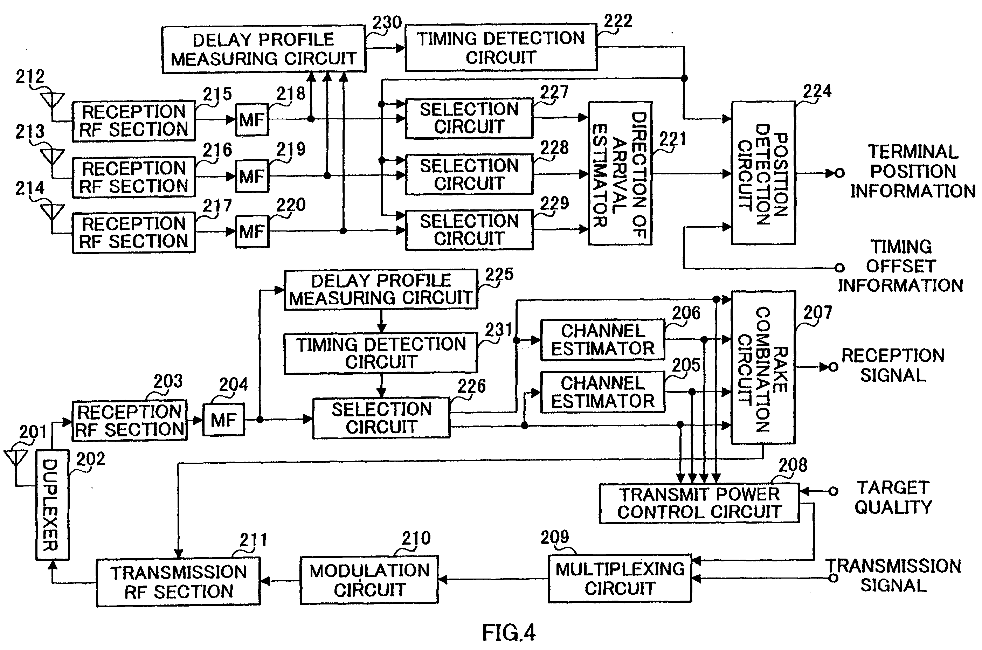

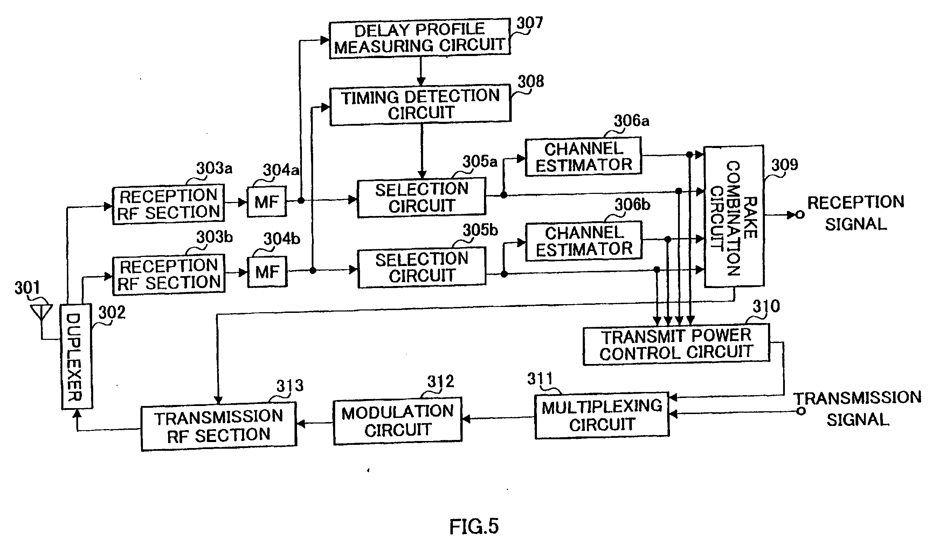

More specifically, operations of the above base station apparatuses and mobile station apparatus will be explained using FIG.4 and FIG.5. FIG.4 is a block diagram showing a configuration of the base station apparatus according to the embodiment of the present invention. FIG.5 is a block diagram showing a configuration of the mobile station apparatus carrying out a communication with the base station shown in FIG. 4. Here, suppose a CDMA (Code Division Multiple Access) system is used.

In FIG.4, reception RF sections 215 to 217 amplify signals received by antennas 212 to 214 respectively, convert their frequency to an intermediate frequency or baseband frequency, subject the signals to coherent detection and output the signals to matched filters 218 to 220. Matched filters 218 to 220 perform despreading on the output signals from reception RF sections 215 to 217 by their specific spreading codes and output the spread signals to delay profile measuring circuit 230 and selection circuits 227 to 229.

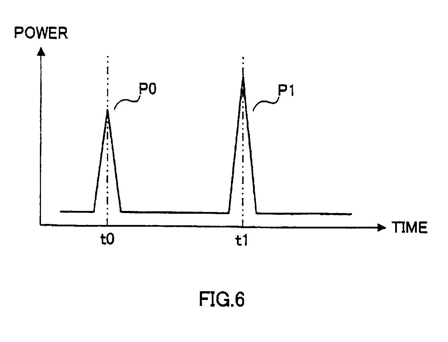

Delay profile measuring circuit 230 measures delay profiles (reception power at a predetermined time) of matched filters 218 to 220 and outputs the measurement result to timing detection circuit 222. FIG.6 illustrates an example of the delay profile measurement result. In FIG.6, the horizontal axis expresses the time and the vertical axis expresses power. In a radio communication, there is not only a direct wave, which is a transmission signal directly arriving at the receiving side but also a delay wave, which arrives after being reflected by mountains and buildings, etc. FIG.6 shows that a direct wave signal of power p0 arrives at time t0 and a delay wave signal of power p1 arrives at time t1.

Timing detection circuit 222 detects the time at which a signal arrives from a delay profile and outputs the information about the time at which the first reception path among the detected paths to selection circuits 227 to 229 and position detection circuit 224.

Selection circuits 227 to 229 output the output signals of matched filters 218 to 220 at the time at which the first arriving signal arrives to direction of arrival estimator 221 based on the information output from timing detection circuit 222.

Direction of arrival estimator 221 estimates the direction of arrival of the reception signal from the output signals of selection circuits 227 to 229, detects the direction angle between the own station and mobile station apparatus and outputs the information on the detected direction angle to position detection circuit 224.

Position detection circuit 224 measures a propagation delay from the information on the time at which the first arriving signal has arrived and timing offset information and calculates the distance between the own station and mobile station apparatus. Then, position detection circuit 224 outputs terminal position information indicating the distance and the direction angle between the own station and mobile station apparatus to a central control station, which is not shown in the figure.

Antenna duplexer 202 allows a same antenna to be used for both transmission and reception and outputs a signal received by antenna 201 to the reception RF section 203 and sends a transmission signal output from transmission RF section 211 to antenna 201.

Reception RF section 203 amplifies the reception signal input from antenna duplexer 202 and converts its frequency to an intermediate frequency or baseband frequency and outputs the signal to matched filter 204. Matched filter 204 performs despreading by multiplying the output signal of reception RF section 203 by its specific spreading code and outputs the despread signal to delay profile measuring circuit 225 and selection circuit 226.

Delay profile measuring circuit 225 measures a delay profile of the output signal of matched filter 204 and outputs the measurement result to timing detection circuit 231. Timing detection circuit 231 detects the time at which the signal exists from the delay profile and outputs the information on the detected time to selection circuit 226.

Selection circuit 226 outputs the output signal of matched filter 204 to channel estimators 205 and 206. More specifically, selection circuit 226 sends an advance wave to channel estimator 205 and a delay wave to channel estimator 206. Channel estimators 205 and 206 estimate phase and amplitude variations of the reception signal due to fading. Then, RAKE combination circuit 207 synchronizes the advance wave and delay wave and compensates the phase and amplitude variations of fading estimated by channel estimator 205 for the advance wave and compensates the phase and amplitude variations of fading estimated by channel estimator 206 for the delay wave.

Then, RAKE combination circuit 207 carries out RAKE combination on the corrected signals to obtain a demodulated signal and outputs the data part to the central control station, which is not shown in the figure, and outputs a power control command to transmission RF section 211. Moreover, RAKE combination circuit 207 performs RAKE combination by adding up the compensated reception data above to obtain the reception signal.

The channel-estimated values from channel estimators 205 and 206 are also output to transmit power control circuit 208. Multiplexing circuit 209 multiplexes the transmit power control command calculated by transmit power control circuit 208 with the transmission signal. Modulation circuit 210 carries out primary modulation processing such as QPSK modulation and spreading modulation on this result. Transmission RF section 211 carries out quadrature modulation, frequency conversion and amplification processing, etc. Regarding amplification, power is controlled based on the received transmit power control command. This radio signal is transmitted from antenna 201 via antenna duplexer 202.

Then, the configuration of the mobile station apparatus carrying out a radio communication with the base station apparatus in FIG.4 will be explained using the block diagram in FIG.5. This mobile station apparatus is provided with two reception systems to carry out diversity handover.

Antenna duplexer 302 allows a same antenna to be used for both transmission and reception and outputs a signal received by antenna 301 to reception RF sections 303a and 303b and sends a transmission signal output from transmission RF section 313 to antenna 301.

Reception RF sections 303a and 303b amplify the reception signal input from antenna duplexer 302 and convert its frequency to an intermediate frequency or baseband frequency and outputs the signals to matched filters 304a and 304b respectively. Matched filters 304a and 304b perform despreading by multiplying the output signals of reception RF sections 303a and 303b by their specific spreading code and outputs the despread signals to delay profile measuring circuit 307 and selection circuits 305a and 305b.

Delay profile measuring circuit 307 measures delay profiles of the output signals of matched filters 304a and 304b and outputs the measurement result to timing detection circuit 308. Timing detection circuit 308 detects the time at which the signals exist from the delay profiles and outputs the information on the detected time to selection circuits 305a and 305b.

Selection circuits 305a and 305b output the output signals of matched filters 304a and 304b to channel estimators 306a and 306b. More specifically, selection circuits 305a and 305b send an advance wave to channel estimator 306a and a delay wave to channel estimator 306b. Channel estimators 306a and 306b estimate phase and amplitude variations due to fading of their respective reception signals. RAKE combination circuit 309 synchronizes the advance wave and delay wave and compensates phase and amplitude variations of fading estimated by channel estimator 306a for the advance wave and compensates phase and amplitude variations of fading estimated by channel estimator 306b for the delay wave.

Then, RAKE combination circuit 309 carries out RAKE combination on the corrected signals to obtain a demodulated signal and outputs the data part to the central control station, which is not shown in the figure, and outputs a power control command to transmission RF section 313. Furthermore, RAKE combination circuit 309 performs RAKE combination by adding up the above compensated reception data to obtain the reception signal.

The channel-estimated values from channel estimators 306a and 306b are also output to transmit power control circuit 310. Multiplexing circuit 311 multiplexes the transmit power control command calculated by transmit power control circuit 310 with the transmission signal. Modulation circuit 312 carries out primary modulation processing such as QPSK modulation and spreading modulation on this result. Transmission RF section 313 carries out quadrature modulation, frequency conversion and amplification processing, etc. Regarding amplification, power is controlled based on the received transmit power control command. This radio signal is transmitted from antenna 301 via antenna duplexer 302.

Then, the position detection operation in a diversity handover state carried out by the base station apparatus with the above configuration of the present invention will be explained. Suppose a case where the mobile station apparatus sends the radio network controller the information that the mobile station apparatus is in a diversity handover state.

The radio network controller sends an instruction for a change to all base station apparatuses involved in diversity handover to increase the target quality of transmit power control toward the mobile station apparatus. This instruction for a change is input to transmit power control circuit 208 of the base station apparatus as the target quality. Each base station apparatus performs transmit power control based on the changed target quality. As an example of the transmit power control method, desired wave power (S) and interference wave power (I) in a reception signal are measured and if the ratio (SIR) is lower than the target quality, a transmit power control command to increase transmit power is generated, and if the ratio is higher than the target quality, a transmit power control command to decrease transmit power is generated.

This target quality of transmit power control is changed between a service requiring immediate attention, service requiring a certain degree of accuracy and other special service as appropriate. For example, control is performed in such a way that for a service requiring immediate attention such as an emergency call and service requiring accuracy such as diversity handover, the target quality is increased, while for a service not requiring immediate attention and service with low accuracy, the target quality is not increased so much. Performing such control makes it possible to perform position detection according to the required accuracy and reduce interference with other base station apparatuses as well.

Regarding position detection, first, the signal received by antenna 212 is amplified and its frequency converted to an intermediate frequency or baseband frequency by reception RF section 215. The output signal of reception RF section 215 is despread by matched filter 218 using its specific spreading code and output to delay profile measuring circuit 230 and selection circuit 227.

Likewise, the signal received by antenna 213 is amplified and its frequency converted to an intermediate frequency or baseband frequency by reception RF circuit 216. The output signal of reception RF circuit 216 is despread using a specific spreading code by matched filter 219 and output to delay profile measuring circuit 230 and selection circuit 228.

In addition, the signal received by antenna 214 is amplified and its frequency converted to an intermediate frequency or baseband frequency by reception RF circuit 217. The output signal of reception RF circuit 217 is despread using a specific spreading code by matched filter 220 and output to delay profile measuring circuit 230 and selection circuit 229.

Delay profile measuring circuit 230 measures the delay profiles of the output signals of matched filters 218 to 220 and timing detection circuit 222 detects the time of arrival of each reception signal and outputs the information on the time of arrival of the first arriving signal (advance wave) of the detected arrival times to selection circuits 227 to 229 and position detection circuits 224.

Selection circuits 227 to 229 output the output signals of matched filters 218 to 220 at the time of arrival of the first arriving signal to direction of arrival estimator 221 based on the information output from timing detection circuit 222.

Direction of arrival estimator 221 estimates the direction of arrival of the reception signal based on the output signals of selection circuits 227 to 229, detects the direction angle formed between the own station and mobile station apparatus and outputs the information on the detected direction angle to position detection circuit 224.

Position detection circuit 224 measures a propagation delay from the information on the time of arrival of the first arriving signal and timing offset information and calculates the distance between the own station and mobile station apparatus. Then, position detection circuit 224 outputs the terminal position information indicating the distance and direction angle between the own station and mobile station apparatus to the radio network controller.

As shown above, carrying out processing of simultaneously indicating the target quality for transmit power control from the radio network controller to base station apparatuses involved in diversity handover, that is, simple processing of sending a same value to all base station apparatuses involved in diversity handover makes it possible to carry out position detection correctly even during diversity handover and reduce interference with other base station apparatuses. Therefore, it is possible to control transmit power to a level where position detection is possible without problems even during diversity handover during which the reception quality is unstable.

The above embodiment describes the case where the target quality of transmit power control is changed when performing position detection during diversity handover, but the present invention is not limited to such a situation alone. The present invention is also applicable to cases where the transmit power control operation is changed in a specific situation or when a specific service is provided.

For example, it is possible to perform such control that raises the target quality for a service requiring immediate attention and does not raise so much the target quality for a service without requiring immediate attention and with low accuracy. Performing such transmit power control according to the required accuracy can also reduce interference with other base station apparatuses.

This application is based on the Japanese Patent Application No.HEI 10-336112 filed on November 26, 1998. entire content of which is expressly incorporated by reference herein.

## Claims

1. A base station apparatus comprising:

   receiving means for receiving information on a change of target quality of transmit power control broadcast to related base station apparatuses from a control station that controls a plurality of base station apparatuses; and
   transmit power controlling means for changing the target quality of transmit power control based on said information and performing transmit power control over a communication terminal apparatus with the changed target quality.

2. The base station apparatus according to claim 1, wherein the transmit power controlling means performs transmit power control over the communication terminal apparatus with the changed target quality during diversity handover.

3. The base station apparatus according to claim 1, further comprising:

   estimating means for estimating the direction of arrival of signals from signals received from a plurality of antennas; and
   position detecting means for detecting the position of said communication terminal apparatus from an advance wave of the signal from the estimated direction of arrival.

4. A base station apparatus comprising:

notifying means for notifying a control station that controls base station apparatuses that diversity handover is taking place; and

transmit power controlling means for performing transmit power control based on information on transmit power control whose target quality has been changed according to an instruction from said control station.

5. A transmit power control method comprising the steps of:

receiving information on a change of target quality of transmit power control broadcast to related base station apparatuses from a control station that controls a plurality of base station apparatuses; and
changing the target quality of transmit power control based on said information and performing transmit power control over a communication terminal apparatus with the changed target quality.

6. The transmit power control method according to claim 5, wherein transmit power control is performed over the communication terminal apparatus with said changed target quality during diversity handover.

7. A position detection method comprising the steps of:

receiving information on a change of target quality of transmit power control broadcast to related base station apparatuses from a control station that controls a plurality of base station apparatuses;
changing the target quality of transmit power control based on said information and performing transmit power control over a communication terminal apparatus with the changed target quality;
estimating the direction of arrival of signals transmitted from said communication terminal apparatus with the changed target quality and received by a plurality of antennas; and
detecting the position of said communication terminal apparatus from an advance wave of the signal in the estimated direction of arrival.

FIG.1

FIG.2

TO NETWORK

104
RNC

BSb
102

103
MS

BSa
101

FIG.3

FIG.4

EP 1 052 791 A1

FIG.5

EP 1 052 791 A1

FIG.6

# INTERNATIONAL SEARCH REPORT

| International application No. |
|---|
| PCT/JP99/06501 |

**A. CLASSIFICATION OF SUBJECT MATTER**
Int.Cl⁷ H04B 7/26, 102
H04J 13/00

According to International Patent Classification (IPC) or to both national classification and IPC

**B. FIELDS SEARCHED**

Minimum documentation searched (classification system followed by classification symbols)
Int.Cl⁷ H04B 7/24- 7/26
H04J 13/00-13/06
H04Q 7/00- 7/38

Documentation searched other than minimum documentation to the extent that such documents are included in the fields searched
Jitsuyo Shinan Koho 1926-2000 Toroku Jitsuyo Shinan Koho 1994-2000
Kokai Jitsuyo Shinan Koho 1971-2000 Jitsuyo Shinan Toroku Koho 1996-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X Y | JP, 08-116306, A (NTT Ido Tsushinmo K.K.), 07 May, 1996 (07.05.96), Column 8, line 26, 49 (Family: none) | 1,5 2-4,6-7 |
| Y | JP, 10-013922, A (NEC Corporation), 16 January, 1998 (16.01.98), Column 7, line 6; column 9, line 4 & BR, 9702505, A | 2,4,6 |
| Y | JP, 08-019035, A (Nippon Telegr. & Teleph. Corp. <NTT>), 19 January, 1996 (19.01.96), Column 5, line 19, 37 (Family: none) | 3,7 |
| A | EP, 680160, A (NTT MOBILE COMMUNICATIONS NETWORK INC), 02 November, 1995 (02.11.95) & JP, 08-018503, A | 1-7 |
| A | EP, 809365, A (NTT MOBILE COMMUNICATIONS NETWORK INC), 26 November, 1997 (26.11.97) & JP, 09-312871, A | 1-7 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 February, 2000 (10.02.00) | 29 February, 2000 (29.02.00) |

| Name and mailing address of the ISA/ Japanese Patent Office | Authorized officer |
|---|---|
| Facsimile No. | Telephone No. |

Form PCT/ISA/210 (second sheet) (July 1992)